Europäisches Patentamt

European Patent Office

Office européen des brevets

(19)

(11) Numéro de publication: **0 032 498**
**B1**

(12) **FASCICULE DE BREVET EUROPEEN**

(45) Date de publication du fascicule du brevet: **28.09.83**

(51) Int. Cl.³: **F 16 L 19/06, F 16 L 13/14**

(21) Numéro de dépôt: **80901484.8**

(22) Date de dépôt: **14.07.80**

(86) Numéro de dépôt international:
**PCT/EP80/00052**

(87) Numéro de publication internationale:
**WO 81/00294 05.02.81 Gazette 81/4**

(54) **PROCEDE DE RACCORDEMENT ETANCHE DE TUBES PAR SERTISSAGE ET RACCORD PAR SERTISSAGE.**

(30) Priorité: **25.07.79 FR 7919196**

(43) Date de publication de la demande:
**29.07.81 Bulletin 81/30**

(45) Mention de la délivrance du brevet:
**28.09.83 Bulletin 83/39**

(84) Etats contractants désignés:
**AT CH DE FR GB LI LU NL SE**

(56) Documents cités:
**FR - A - 705 315**
**FR - A - 1 362 818**
**FR - A - 2 376 985**
**GB - A - 273 369**
**GB - A - 1 313 242**
**US - A - 3 438 655**

(73) Titulaire: **BAZIN, André**
**16, place des Tours**
**F-77115 Blandy-les-Tours (FR)**
(73) Titulaire: **PIGEON, Jacques**
**71, rue Jean Longuet**
**F-92290 Chatenay-Malabry (FR)**

(72) Inventeur: **BAZIN, André**
**16, place des Tours**
**F-77115 Blandy-les-Tours (FR)**
Inventeur: **PIGEON, Jacques**
**71, rue Jean Longuet**
**F-92290 Chatenay-Malabry (FR)**

(74) Mandataire: **Moinas, Michel**
**c/o MOINAS & CIE Case Postale 88**
**CH-1211 Genève 4 (CH)**

Courier Press, Leamington Spa, England.

Procédé de raccordement étanche de tubes par sertissage et raccord par sertissage

Le raccordement étanche de tubes a fait et fait toujours l'objet de nombreuses recherches sans que des résultats toujours satisfaisants aient été obtenus; l'usage est resté favorable à la soudure, qu'elle soit autogène, brasure ou soudure tendre.

On s'est orienté par exemple vers le raccordement par vissage, comme cela est décrit par exemple dans le US—A—3 438 655. Dans cet exposé d'invention, les deux tubes sont raccordés à l'aide d'un couple de pièces filetées sur toute leur longueur active. Une au moins des pièces est conique et l'étanchéité est assurée par l'emploi d'une bague. La pièce inter-médaire se trouve simplement déformée jusqu'à prendre appui sur le tube.

Actuellement, le sertissage reprend tout son intérêt, du fait des fabricants de tubes qui trouvent avantageux de proposer la substitution de l'acier inoxydable au cuivre et au plomb, ces derniers ne présentant aucune difficulté à être soudés à eux-mêmes, ou entre eux. La disparité des caractères physiques et chimiques de l'acier inoxydable et du cuivre en particulier, imposait de trouver une autre solution pour leur assemblage.

Un raccordement par sertissage est par exemple décrit dans le FR—A—2 376 985. On remarquera cependant que les assemblages proposés sont d'une réalisation compliquée, par suite notamment de la géométrie extérieure complexe du manchon. En outre, l'entrée des bagues sur le manchon se fait à force, ce qui nécessite un outillage approprié nécessairement lourd à mettre en oeuvre. Enfin les sertissages doivent être "glissants", c'est-à-dire progresser sur les tubes au fur et à mesure de la progression des bagues sur le manchon. Il ne peut donc s'appliquer qu'à des tubes qui présentent un retour ou un rétablissement élastique.

La présente invention résoud avantageusement les problèmes énoncés ci-dessus. Elle se rapporte à un procédé de raccordement étanche de tubes par sertissage dans lequel on positionne les tubes à raccorder dans un manchon qui comprend au niveau des sertissages à réaliser une surépaisseur extérieure filetée. La surépaisseur extérieure du manchon étant filetée, on réalise le sertissage annulaire des tubes en vissant à chaque extrémité du manchon un écrou à géométrie conique, ci-après dénommé "écrou sertisseur", dont le taraudage correspond au filetage de la surépaisseur. Le procédé met donc en oeuvre des pièces complémentaires l'une de l'autre, façonnées de telle manière que leur assemblage, par vissage, réalise le sertissage du raccord sur les tubes à raccorder.

L'invention se rapporte également à un raccord qui, une fois monté, est constitué d'au moins deux tubes sertis annulairement par le rétreint d'un manchon présentant au moins deux surépaisseurs. Les surépaisseurs sont filetées et recoivent chacune, par vissage, un écrou à géométrie conique ayant un taraudage correspondant au filetage.

Ces raccords tiennent sans problème une pression de 50 à 100 bars, selon leur diamètre et leur mode de réalisation, certaines éprouvettes ayant tenu 200, voire 300 bars. Avantageusement, et sans que cela n'influe de façon déterminante sur leur tenue à la pression, ils sont réalisés à l'aide d'écrous sertisseurs à géométrie conique, dont la hauteur et/ou la largeur des filets est comprise entre 1/4 et 1/30 du pas de filetage (écrous sertisseurs se vissant dans les surépaisseurs du manchon ayant un filetage correspondant) lui donnant un aspect "aplati", "évasé" ou "arrondi". De préférence, il y a plusieurs filets au tour, par exemple 3, disposés chacun à 120°.

Parler de sertissage annulaire, c'est dire que la surépaisseur est de dimensions réduites par rapport au manchon. En d'autres termes, ces surépaisseurs sont localisées et relativement étroites, de 1 à 6 mm par exemple. Elles peuvent être situées en bout de raccord ou à quelque distance des extrémités de celui-ci.

Cette forme de réalisation permet:

— d'une part une économie de matière puisqu'avec un filetage classique, les écrous seraient beaucoup plus larges et volumineux,
— et surtout la possibilité de visser et de sertir avec un faible couple, de l'ordre de 2 à 3 kgm, ce qui autorise la mise en oeuvre sur chantier, sans étau et, facteur de première importance, la raccordement en coude et en T, sans torsion ou déformation dudit coude en T.

Les résistances et duretés respectives des pièces constitutives du raccord sont dans un ordre égal ou décroissant comme suit: écrous, tubes, manchon, ce qui peut être réalisé par un choix judicieux des matériaux ou en jouant sur l'épaisseur respective desdites pièces.

On peut ainsi notamment assembler des tubes en acier, en acier inoxydable, en titane, en cuivre, en aluminium ou leurs alliages à l'aide d'écrous sertisseurs en laiton, en acier ou en dural par exemple et en particulier d'un manchon en cuivre, en aluminium, en matière plastique ou plasto-élastique non armée ou armée, ou en acier inoxydable dans la variante avec joint décrite ci-après.

Avantageusement, l'angle du cône est compris entre 2 et 7°, par exemple 3°30, et le pas entre 1,5 et 7 mm, par exemple 5 mm.

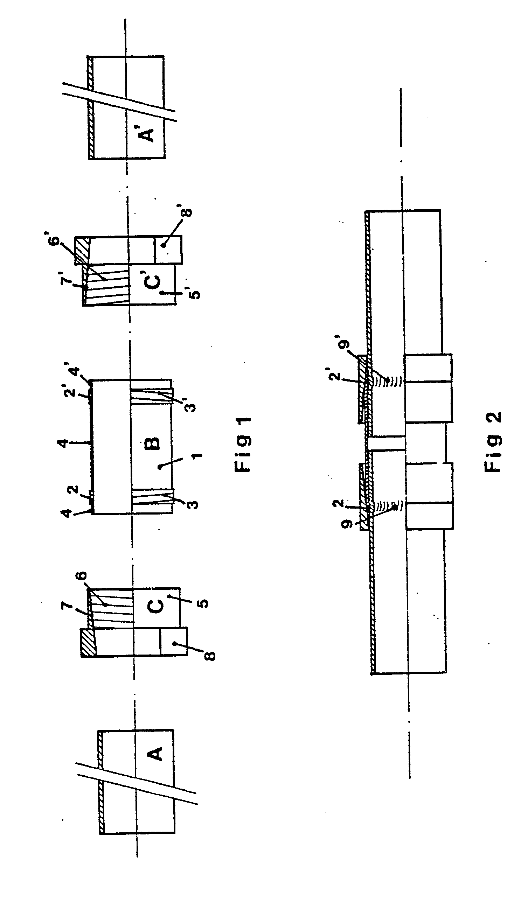

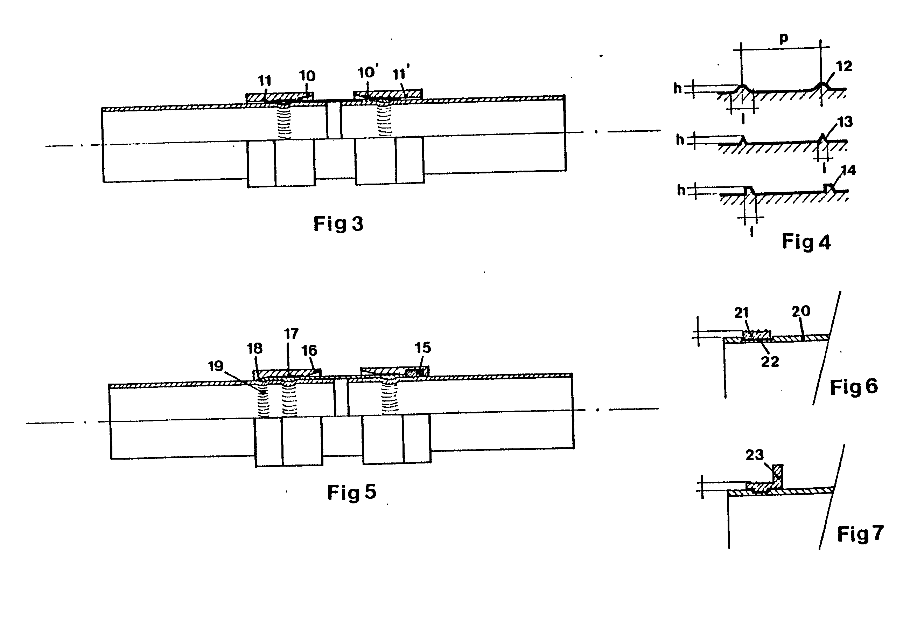

Diverses formes d'exécution apparaîtront sur les dessins annexés. Les figures 1 à 3, 5 et 8 à 10 sont des demi-coupes. Les figures 4, 6 et 7 sont des coupes de détails. Pour la commodité de l'exposé et la clarté des dessins, ne sont référencés sur ceux-ci que les éléments nouveaux ou différents d'une figure à l'autre.

La fig. 1 représente un raccord non encore monté. Il est monté sur la fig. 2.

Les fig. 3 et 5 représentent, montées, d'autres formes d'exécution du raccord selon l'invention.

La fig. 4 est une illustration de quelques types de filetage, "aplati", "évasé" ou "arrondi", comme définis plus haut.

La Fig. 6 représente un manchon en deux parties, avec une bague filetée, de préférence fendue axialement, tenant lieu de surépaisseur. Dans la fig. 7, cette bague présente un collier et peut jouer le rôle de contre-écrou lors du serrage.

La fig. 8 présente un raccord pour deux tubes de diamètre différent; la fig. 9, un raccord en coude et la fig. 10 un raccord en T.

Dans la fig. 1, on a représenté en A et A' deux sections de tubes à assembler, en B le manchon présentant un corps cylindrique 1 et deux surépaisseurs 2 et 2' extérieures avec filetage 3 et 3'. En 4 et 4' se trouvent les parties lisses du manchon, lequel peut avoir un point ou une ligne en creux, non représentée, pour faciliter le positionnement des tubes. C et C' sont deux écrous sertisseurs à géométrie purement conique. Ces écrous sont constitués d'un corps 5 (5'), taraudé selon un filetage 6 (6'); 7 (7') représente l'alésage fileté conique et 8 (8') une tête extérieure destinée à permettre l'entraînement mécanique.

Dans la figure 2, le raccord est monté; l'effort de compression radiale, sous la poussée axiale de l'écrou conique en vissage, s'est traduit, au niveau de la surépaisseur filetée 2 (2'), par un rétreint annulaire 9 (9') dans le tube, assurant le sertissage, l'étanchéité, la tenue et la rigidité mécaniques. L'écrou peut constituer une frette placée à demeure.

Dans la fig. 3, le raccord comprend deux écrous à géométrie tout d'abord conique 10 et 10', puis cylindrique 11 et 11', ou à conicité moindre, le filetage s'étendand de préférence à la fois sur les parties 10 et 10' et 11 et 11'.

Dans la fig. 4 sont données à titre d'exemple quelques géométries de filetage, sphérique 12, triangulaire 13 ou trapézoïdale 14, avec une largeur de filet 1 et une hauteur de filet h petites par rapport au pas p.

Dans la fig. 5, on a représenté, montées, à droite une variante d'écrou sertisseur avec joint 15, à gauche, une variante d'écrou sertisseur avec une géométrie conique 16, puis cylindrique 17 et enfin conique 18, géométrie qui assure, si besoin est, un deuxième sertissage par rétreint 19 ou étranglement complémentaire.

Dans la fig. 6, on rencontre dans le manchon 20 une bague filetée 21 positionnée soit par une butée appropriée, non représentée, soit dans une creusure 22 ménagée dans le manchon. Cette bague tient lieu de surépaisseur filetée.

Dans la fig. 7, la bague filetée possède un collier 23 lui permettant d'agir comme contre-écrou au cours du serrage.

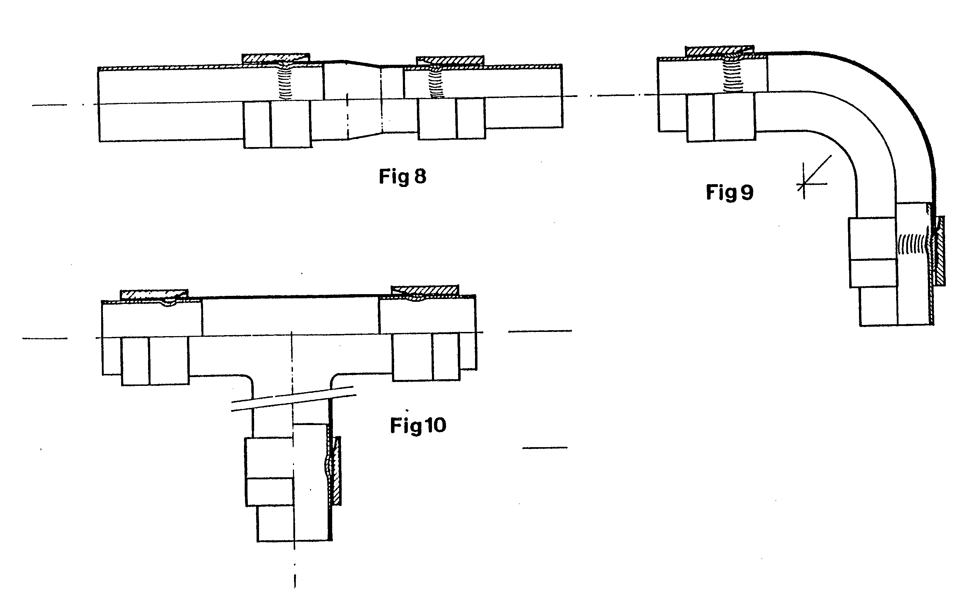

Les fig. 8, 9 et 10 représentent des formes d'exécution semblables à celle de la fig. 3, pour des raccords de tubes de diamètre différent, en coude et en T.

L'opération de raccordement s'effectue simplement, en référence aux fig. 1 et 2, en positionnant dans le manchon les tubes sur lesquels ont été préalablement enfilés les écrous sertisseurs ou bien en positionnant les tubes dans le manchon sur lequel a été amorcé le vissage des écrous sertisseurs, puis en vissant avec des clefs usuelles les écrous sur la manchon. En variante, les écrous sont préalablement graissés ou lubrifiés à sec, avec du bisulfure de molybdène par exemple. En autre variante, un intercalaire ou un film intercalaire, métallique ou plastique est interposé entre le manchon et les tubes. La force à exercer est faible, de l'ordre de 2 à 3 kgm. L'ensemble coopère de la façon suivante: la poussée axiale du vissage se traduit, par suite de la géométrie conique des écrous, par une poussée radiale au niveau des surépaisseurs filetées du manchon, lesquelles transmettent l'effort sur les tubes et les sertissent par rétreint. Dans le raccord monté, les tubes sont donc étranglés, de façon quasi-imperceptible, mais suffisante pour assurer la tenue à la pression et l'étanchéité. Les écrous peuvent être retirés, mais on préfère généralement les laisser en place à titre de frettes. Dans la forme d'exécution de la partie gauche de la fig. 5, un deuxième étranglement est provoqué par la géométrie double-conique de l'écrou.

On garde en outre une possibilité de resserrage pour aveugler une fuite éventuelle consécutive par exemple à un montage incomplet ou défectueux.

Le manchon peut porter un ou plusieurs bourrelets venant servir de butée aux écrous afin de garantir un vissage symétrique.

De par ses caractéristiques de simplicité, de facilité d'assemblage (faible coupe), le procédé de raccordement peut être mis en oeuvre aussi bien en usine qu'en chantiers, en plomberie, dans les domaines sanitaire ou gazier du bâtiment, dans le montage d'oléoducs ou de gazoducs. Du fait de leur haute tenue à la pression (50 à plus de 300 bars), les raccords sont tout indiqués quand des fluides sous pression doivent être véhiculés (pompes, échangeurs de chaleur, etc.)

**Revendications**

1. Procédé de raccordement étanche de tubes par sertissage selon lequel on positionne les tubes à raccorder dans un manchon B qui comprend, au niveau des sertissages à réaliser une surépaisseur extérieure (2, 2') caractérisé en ce quel la surépaisseur extérieure (2, 2') du manchon B étant filetée, on réalise le sertissage annulaire des tubes A et A' en vissant à chaque extrémité du manchon B un écrou C à géométrie conique dont le traudage correspond au filetage de la surépaisseur.

2. Procédé selon la revendication 1, caractérisé par le fait que la largeur des filets (1) est comprise entre 1/4 et 1/30 du pas (p) du filetage (3, 3').

3. Procédé selon la revendication 1, caractérisé par le fait que la hauteur des filets (h) est comprise entre 1/4 et 1/30 du pas (p) du filetage (3, 3').

4. Procédé selon la revendication 1, caractérisé par le fait que l'écrou C est à géométrie conique (10), puis cylindrique (11) ou à conicité plus faible.

5. Procédé selon la revendication 1, caractérisé par le fait que l'écrou C est à géométrie conique (16), puis cylindrique (17), puis conique (18).

6. Procédé selon l'une des revendications 1, 4 ou 5, caractérisé par le fait que l'angle du cône de l'écrou C est compris entre 2 et 7°.

7. Procédé selon la revendication 1, caractérisé par le fait que le pass (p) du filetage (3, 3') est compris entre 1,5 et 7 mm.

8. Procédé selon la revendication 1, caractérisé par le fait que le filetage (3, 3') est multiple.

9. Procédé selon la revendication 1, caractérisé par le fait que la surépaisseur (2, 2') est de dimensions réduites par rapport au manchon B.

10. Procédé selon la revendication 1, caractérisé par le fait que le manchon B est en deux parties, la surépaiseur (2) étant remplacée par une bague filetée (21) amovible positionnée.

11. Procédé selon la revendication 10, caractérisé par le fait que la bague (21) comporte un collier (23) pouvant jouer le rôle de contre-écrou lors du vissage.

12. Procédé selon la revendication 1, caractérisé par le fait que les tubes A et A' à raccorder sont en acier inoxydable.

13. Procédé selon la revendication 1, caractérisé par le fait que l'écrou C est muni d'un joint (15).

14. Procédé selon la revendication 6, caractérisé par le fait qu'on réalise un étranglement complémentaire (19) du tube.

15. Procédé selon la revendication 1, caractérisé par le fait que le manchon B comprend, en position intérieure par rapport à la surépaisseur filetée (2, 2'), un bourrelet servant de buté à l'écrou C.

16. Raccord pour tubes, constitué essentiellement d'au moins deux tubes A et A' sertis annulairement par le rétreint d'un manchon B présentant au moins deux surépaisseurs (2, 3'), caractérisé en ce que les surépaisseurs sont filetées et reçoivent chacune, par vissage, un écou C à géométrie conique ayant un taraudage correspondant au filetage.

17. Raccord selon la revendication 16, caractérisé par le fait que les écrous C sont à géométrie conique (10), puis cylindrique (11).

**Patentansprüche**

1. Verfahren zur abdichtenden Verbindung von Rohren durch Pressen, wobei die zu verbindenden Rohre in eine Hülse B eingesetzt werden, die eine Aussenverstärkung (2,2') in der Höhe der durchzuführenden Verpressungen aufweist, dadurch gekennzeichnet, dass diese Aussenverstärkung (2,2') der Hülse B mit Gewinde versehen ist, und dass man das ringartige Verpressen der Rohre A und A' durchführt, indem man einen konischen Schraubring C an jedes Ende der Hülse B schraubt, wobei die Gewindebohrung des Schraubrings C dem Gewinde der Aussenverstärkung (2,2') entspricht.

2. Verfahren gemäss Anspruch 1, dadurch gekennzeichnet, dass die Breite (1) der Gewindebohrungen des Gewindes zwischen 1/4 und 1/30 der Steigung (p) des Gewindes (3, 3') liegt.

3. Verfahren gemäss Anspruch 1, dadurch gekennzeichnet, dass die Höhe (h) der Gewindebohrungen des Gewindes zwischen 1/4 und 1/30 der Steigung (p) des Gewindes (3,3') liegt.

4. Verfahren gemäss Anspruch 1, dadurch gekennzeichnet, dass der Schraubring C erst konisch (10) und dann zylindrisch (11) oder konisch mit geringerer Steilheit ausgebildet ist.

5. Verfahren gemäss Anspruch 1, dadurch gekennzeichnet, dass der Schraubring C erst konisch (16), dann zylindrisch (17) und dann wieder konisch (18) ausgebildet ist.

6. Verfahren gemäss einem der Ansprüche 1, 4 oder 5, dadurch gekennzeichnet, dass der Kegelwinkel des Schraubrings C zwischen 2 und 7° liegt.

7. Verfahren gemäss Anspruch 1, dadurch gekennzeichnet, dass die Steigung (p) des Gewindes (3,3') zwischen 1,5 und 7 mm liegt.

8. Verfahren gemäss Anspruch 1, dadurch gekennzeichnet, dass das Gewinde (3,3') ein Mehrfachgewinde ist.

9. Verfahren gemäss Anspruch 1, dadurch gekennzeichnet, dass die Verstärkung (2,2') geringere Ausdehnungen in Bezug auf die Hülse B aufweist.

10. Verfahren gemäss Anspruch 1, dadurch gekennzeichnet, dass die Hülse B zweiteilig ist, und dass die Verstärkung (2,2') durch einen ein Gewinde aufweisenden, in Wirkstellung gebrachten, abnehmbaren Ring (21) ersetzt ist.

11. Verfahren gemäss Anspruch 10, dadurch gekennzeichnet, dass der Ring (21) einen Reifen (23) aufweist, der während des Verschraubens als Gegenmutter dienen kann.

12. Verfahren gemäss Anspruch 1, dadurch gekennzeichnet, dass die zu verbindenden Rohre A und A' aus rostfreiem Stahl sind.

13. Verfahren gemäss Anspruch 1, dadurch gekennzeichnet, dass der Schraubring C eine Dichtung (15) aufweist.

14. Verfahren gemäss Anspruch 6, dadurch gekennzeichnet, dass man das Rohr mit einer zusätzlichen einschnürung (19) versieht.

15. Verfahren gemäss Anspruch 1, dadurch gekennzeichnet, dass die Hülse B einen Wulst aufweist, der dem Schaubring C also Anschlag dient, und sich in Bezug auf die Verstärkung (2,2') innen befindet.

16. Rohrverbindung, die im wesentlich aus mindestens zwei Rohren A und A' besteht, die ringförmig durch Verengung einer mindestens zwei Verstärkungen (2,2') aufweisenden Hülse B pressend verbunden sind, dadurch gekennzeichnet, dass die Verstärkungen Gewinde aufweisen, und dass auf jede Verstärkung ein kegelförmiger Schraubring C aufgeschraubt ist, wobei die Gewindebohrung des Schraubrings dem genannten Gewinde entspricht.

17. Verbindung gemäss Anspruch 16, dadurch gekennzeichnet, dass die Schraubringe C kegelförmig (10) und dann zylindrisch (11) ausgebildet sind.

## Claims

1. A method for the fluid-tight connection of tubes by crimping, which comprises positioning the tubes to be connected in a sleeve B which is provided with an external thickened zone (2,2') characterized in that the thickened zone (2,2') of the sleeve B being screwthreaded at the level of the crimps to be formed, the annular crimping of the tubes A and A' is carried out by screwing onto each end of the sleeve B a conically shaped nut C of which the screwthread corresponds to the screwthread of the thickened zone.

2. A method as claimed in Claim 1, in which the width of the threads (1) is between 1/4 and 1/30 of the lead (p) of the screwthread (3,3').

3. A method as claimed in Claim 1, in which the height of the threads (h) is between 1/4 and 1/30 of the lead (p) of the screwthread (3,3').

4. A method as claimed in Claim 1 wherein the nut C is first conically shaped (10), and then cylindrically (11) or less conically.

5. A method as claimed in Claim 1 wherein the nut C is first conically shaped (16), then cylindrically (17), then conically (18).

6. A method as claimed in any of Claims 1, 4 or 5 wherein the angle of the cone of the nut C is between 2 and 7°.

7. A method as claimed in Claim 1 wherein the lead (p) of the screwthreaded (3,3') is between 1.5 and 7 mm.

8. A method as claimed in Claim 1 wherein the screwthread (3,3') is multiple.

9. A method as claimed in Claim 1 wherein the thickened zone (2,2') has reduced dimensions in relation to the sleeve B.

10. A method as claimed in Claim 1 wherein the sleeve B is in two parts, the thickened zone (2) being formed by a positioned and removable screwthreaded collar (21).

11. A method as claimed in Claim 10 wherein the collar (21) comprises a flange (23) designed to act as a checknut during screwing.

12. A method as claimed in Claim 1 wherein the tubes A and A' to be connected are made of stainless steel.

13. A method as claimed in Claim 1 wherein the nut C is provided with a seal (15).

14. A method as claimed in Claim 6 wherein at least one of the tubes is subjected to complementary constriction (19).

15. A method as claimed in Claim 1 wherein the sleeve B is internally provided—in relation to the threaded thickened zone (2,2')—with a bead acting as a stop for the nut C.

16. A tube connection comprising at least two tubes A and A' annularly crimped by the reduction of a sleeve having at least two thickened zones (2,2') characterized in that the thickened zones are screwthreaded, each of them receiving by screwing a conically shaped nut C having a thread corresponding to the screwthread of the thickened zone.

17. A connection as claimed in Claim 16 wherein the nuts C are first conical (10) and then cylindrical (11) in shape.

A

C

7

6

8

5

4 2 4 2' 4'

B

3 1 3'

7' 6'

C'

5' 8'

A'

**Fig 1**

9 2 2' 9'

**Fig 2**

0 032 498

Fig 4

Fig 6

Fig 7

Fig 3

Fig 5

Fig 9

Fig 8

Fig 10

3